# EUROPÄISCHE PATENTSCHRIFT

(11) **EP 2 361 805 B1**
(45) Veröffentlichungstag und Bekanntmachung des Hinweises auf die Patenterteilung: **31.10.2012**
(21) Anmeldenummer: 11000476.9
(22) Anmeldetag: 21.01.2011
(51) Int. Cl.: B60P 3/32, B60P 3/025, B62D 33/06

(54) **Wohnmobil mit einem Fahrbereich und einem Wohnbereich**
Recreational vehicle with driving and living compartments
Camper avec un practise et un quartier residentiel

(30) Priorität: 19.02.2010 DE 202010002571 U
(43) Veröffentlichungstag der Anmeldung: 31.08.2011
(73) Patentinhaber: Kubinski, Piotr, 50670 Köln (DE)
(72) Erfinder: Kubinski, Piotr, 50670 Köln (DE)

(56) Entgegenhaltungen:
- EP-A1- 0 070 748
- DE-A1- 4 313 590
- US-B1- 7 263 754

## Beschreibung

### Erfindungsgebiet:

Die Erfindung liegt auf dem Gebiet des Wohnmobilbaus. Sie ist eine besondere, neue Karosserieaufbauform die folgende Aspekte im Vergleich zur Stand der Technik modifizieren soll: Sichtverhältnisse nach Außen (Panoramasicht) während der Fahrt für alle Insassen, Kommunikationsverhältnisse der Insassen untereinander und Sicherheit bei Auffahrunfällen.

Im Stand der Technik bekannte Wohnmobile werden, abhängig vom Karosserieaufbau in folgende Kategorien unterteilt:

Kastenwagen (Kleintransporter) wo der Laderaum zu Wohnzwecken umgebaut wird (USA, Class B).

Alkovenwohnmobile (USA, Class C).

Integrierte, inklusive der auf Reisebusbasis (USA, Class A).

Diese drei Kategorien werden hier nicht erklärt, da deren Definitionen allgemein bekannt und einfach sind.

### Hintergrund der Erfindung:

Aus der Stand der Technik sind die drei, oben genannten grundsätzlichen Wohnmobilaufbautypen, bekannt.

All diese Konzepte weisen, trotz konstruktiven Differenzen und verschiedene Stärken und Schwächen und zeigen folgende Mängel auf:

Die Sitzenden zweiter Reihe sitzen aufgrund der Raumökonomie immer im Wohnraum, wo sich weniger Fensterflächen nach Seiten befinden. Durch die gewisse Entfernung zu Sitzenden der ersten Reihe, wird die Kommunikation erschwert.

Die Bodenhöhe der Fahrkabine gleicht ungefähr der Bodenhöhe des Wohnabteils, wodurch im Falle eines Auffahrunfalls die Gegenstände aus dem Wohnabteil, die nach vorne geschleudert werden, den Fahrer und Beifahrer verletzen könnten.

Darüber hinaus sind aus dem Stand der Technik, nach Recherchen, besondere Wohnmobilausführungen bekannt:
DE 89 09 745 U1 beschreibt ein Wohnmobil mit erhöhten Sitzen was die Weitsicht aus der Kabine verbessert, jedoch:
   die Kabine ragt nicht über den Dach (hier Pat. Anspruch 1.) -
   rundum Sicht ist nicht gegeben -
   die Erfindung modifiziert bzw. bezieht sich nur auf Fahrer-, Beifahrerraum, die Sitzbedingungen weiterer Insassen werden nicht verändert.

DE 103 06 021 B4 beschreibt ein Wohnmobil mit Cabriodach. Das Novum ist, dass es an einem Wohnmobil verbaut ist, ansonsten ist ein Cabriolet nichts Neues. In der hier dargestellten Erfindung ist es nur eine Option, ähnlich wie bei vielen Pkws, verschiedene Karosserieoptionen eines Models gibt. Ein erfinderischer Anspruch auf "ein Wohnmobil mit Cabriodach" wird hier nicht erhoben.

DE 82 03 376 U1 beschreibt ein Wohnmobil mit Hubdach. Ein Hubdach kommt in dieser Anmeldung in keiner Form vor.

Darüber hinaus sind aus dem Stand der Technik, nach Recherche, folgende Fahrzeugsonderkonstruktionen bekannt, die jedoch keine Wohnmobile sind: US des. 154,742, US Des. 174,727, US Des.85,394. Diese Entwürfe zeigen eine optische Ähnlichkeit zur dieser Anmeldung. Auf diese spezielle Designform im Fahrzeugbau, wird jedoch kein erfinderischer Anspruch erhoben. In der hier vorgestellten Erfindung ist es nur die Folge der Realisierung des erfinderischen Einsatzes. Dieser Einsatz ist bei diesen US Projekten grundsätzlich anders und soweit erkennbar liegt er darin, dass das Führerhaus über dem Fahrgastraum platziert ist. Mögliche Vorteile sind:
Vergrößerung des Fahrgastraumes, da der Fahrerplatz nach oben weicht,
sicherheitstechnisch verbesserte Sicht des Fahrers,
auffälliges Design durch eine Art Kuppel auf dem Fahrzeugdach.
Wichtig: die theoretisch mögliche Verlegung weiterer Sitzplätze in die erhöhte Ebene (wie bei dieser Anmeldung) des Fahrers würde diesen Ideen kontraproduktiv, da gewünschte Rundumsicht des Fahrers über dem Restfahrzeug verhindert wäre. Im Extremmfall, bei Verlegung aller Sitzplätze nach oben (wie bei dieser Anmeldung) würde der "Kuppel Effekt" verschwinden und auch von zwei Ebenen kann auch nicht mehr die Rede sein.

Bei allen 3 Projekten handelt es sich offensichtlich um Fahrzeuge zur Personenbeförderung (kommerziell). Der erhöhte Teil der Kabine ist nicht der gesamte Fahrgastraum. Die Aussonderung des Fahrerplatzes unterstreicht sogar die Trennung des Fahrers von den Fahrgästen (das Gegenteil dieser Erfindung). Situation der Fahrgäste wird nicht modifiziert und unterscheidet sich nicht von den klassischen Fahrzeugen. Daher die Ähnlichkeit mit der Erfindung vorwiegend der optischen Natur.

US Des. 140,209 zeigt so etwas wie einen Doppeldeckerbus. Wie etwa Büsse mit offener zweiten Etage, die in vielen Großstädten für Touristenrundfahrten eingesetzt werden. Hier ist das Vorderteil der zweiten Etage geschlossen was vermutlich ein markantes Design schaffen sollte und wieder mit dieser Anmeldung optische Nähe schafft. Offen bleibt ob bei dem "Bus" die zweite Etage nur eine Aussichtplattform ist oder den Fahrerplatz beinhaltet.

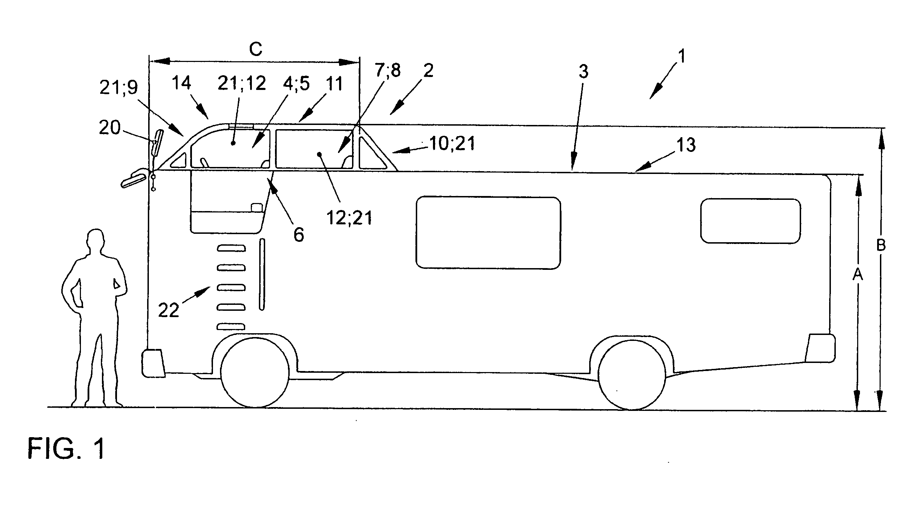

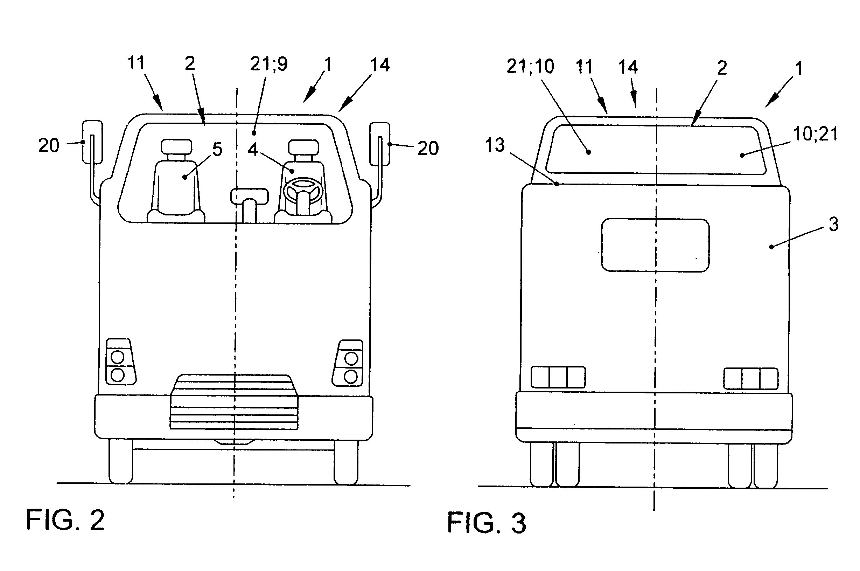

EP 0 070 748 A1 zeigt die Kabine eines LKW. Es ist eine Fernverkehr Kabine mit integrierten Wohn und Schlaffplatz für die Ruhepausen zwischen den Lenkzeiten. Das Novum ist, dass die Wohnkabinne nicht wie üblich hinter, sondern teils unter dem Fahrerplatz plaziert ist. Zudem zeigt die Fig. 3 eine Besonderheit, dass das Dach der Kabinne auf der Beifahrerseite unter die Fensterlinie des Fahrbereiches abgesenkt ist. Das Dach dieser LKW Kabinne ist jedoch nicht hinter dem Fahrerplatz abgesenkt. Das Dach verläuft nach hinten auf konstanter, oder leicht steigender Höhe( Fig.1), was auch aufgrund des aerodynamischen Übergangs zum Laderaum des LKW's eiznig sinnvol ist. Das gezeigte Auto ist ein komerzielles Fahrzeug und ein Langstrecken LKW. Die Kabine eines Fernverkehr -LKW's ist kein Freizeitfahrzeug.

Der Wohnraum ist im Vergleich zu einem typischen Wohnmobil um vielfaches kleiner und erfühlt einen anderen Zweck (Ruhepausen). Es ist kein Ansatz erkennbar, dass der Erfinder seine Idee auf ein Freizeitfahrzeug mit einer Wohnraumlänge von mehreren metern (die größe eines durschnittliches Wohnmobil betragt 6 bis 8 meter) erstrecken wollte. Die Idee bezieht sich eben im Kern auf die Modifizierung einer LKW Kabine (auf einer begrenzten Länge einer LKW Kabine möglichst komfortablen Aufenthalt/ Schlafraum zu gestallten).

Eine Absicht, die Fahrkabinne über dem Dach des Restfahrzeuges zu plazieren ist nicht erkennbar.

Rundumsicht aus der Kabinne ist nicht möglich und aus der Sicht des erfinderischen Einsatzes auch bedeutungsloß (nicht erstrebenswert).

Eine zweite Sitzreihe (für 4 Passagiere insgesamt) existiert bei dieser Kabine nicht und kann aufgrund des Fahrzeugszweck (Fern LKW) und erfinderischen Zwecks, nicht als Option angenommen werden.

DE 43 13 590 A1 zeigt eine LKW Kabine mit einem Aufenthalt/ Schlafraum unter dem Fahrplatz. Die LKW Kabine zeigt zwei Bodenhöhen- eine für den Fahrbereich und eine für den Wohnbereich die übereinander plaziert sind. Weitere Berührungspunkte mit dieser Erfindung sind nicht erkennbar.

### Zusammenfassung der Erfindung:

Die Erfindung betrifft speziell und ausschließlich den Gebiet Wohnmobilbau (recreational vehicles). Das sind nach Definition die Fahrzeuge, die die Funktionen Fahren und Wohnen verbinden. Insbesondere geht es hier um "das Fahren" als eine Freizeitaktivität, also Fahren zum Vergnügen, um das Land und die Sehenswürdigkeiten zu erkünden.

Die Erfindung beschreibt eine Wohnmobilkonstruktion die in zwei Bereiche unterteilt ist: ein Fahrbereich für alle Reisenden und ein Wohnbereich mit Wohnausstattung, die nach rechtlichen Anforderungen definiert wird. Diese zwei Bereiche werden hier in einer speziellen Anordnung, auf unterschiedlichen Höhen zueinander platziert und ausgeführt. Bildlich dargestellt befindet sich der Fahrbereich aller (vorzüglich vier) Reisenden, in einer PKW- ähnlicher Fahrgastzelle, die vorne, oben am Wohnmobil platziert ist. Diese Zelle kann wie im einen PKW verschieden ausgebildet sein; es kann eine viersitzige, geschlossene Fahrgastzelle, genauso wie ein Cabriolet sein. Die Besonderheit liegt daran (deshalb der Vergleich mit einem PKW), dass alle Reisenden ähnlich wie beim PKW beieinander sitzen, insbesondere, dass die zweite Sitzreihe sich direkt hinter der ersten Sitzreihe befindet und die Fahrgastzelle rundum verglast ist. Zwischen den rechten und den linken Sitzen mittig, befindet sich ein Abgang nach hinten zum Wohnraum. Darüber hinaus, ist die Fahrgastzelle so platziert, dass das Dach dieser über dem Dach des hinteren Wohnraums nach oben ragt, sodass die Fensterlinie der Fahrgastzelle zumindest teilweise über das Dach des Wohnraums ragt, und die Augenhöhe der Reisenden über dem Dach des Wohnraums liegt. Da die Fahrgastzelle Fenster in alle Richtungen aufweist, insbesondere auch eine Hinterscheibe, verfügen die Reisenden über einen Panoramablick.

Die wichtigsten Merkmale des neuen Konzepts sind:
alle (in der Regel vier) Insassen in einer "Hochsitz" - ähnlichen Position reisen und einen beinahe 360 Grad (horizontal) Weitausblick genießen beide Sitzreihen immer direkt beieinander liegen (wie in einem PKW), was die Kommunikationsverhältnisse verbessert
die Sitzhöhe im Fahrbereich (insbesondere Kopfbereich) über der Flugbahn der Gegenstände aus dem Wohnraum liegt, die im Falle des Unfalls nach vorne geschleudert werden könnten
die Sitzhöhe des Fahrers am obersten Dachrand eine bessere Übersicht bietet und damit hilft, die Kollisionen bei Durchfahrten, mit Baumkronen etc. zu vermeiden. Wohnmobile gehören zu den höchsten Fahrzeugen die von den Fahrern mit PKW-Führerschein und PKW-Erfahrung bewegt werden.

Insbesondere sind hier die zwei ersten Merkmale hervorzuheben. Das die Panoramaweitsicht in Tourismusfahrzeugen von Vorteil ist, bedarf keiner Erläuterung. Wichtig ist aber zu unterstreichen, dass dieser Vorteil für die Passagiere der zweiten Sitzreihe besonders groß ist. Deren Sitze werden in den bekannten Wohnmobilformen wegen der Platzökonomie immer im Wohnteil integriert und zwar folgendermaßen:
in Kastenwagen (Class B), wo die Vordersitze drehbar sind und in den Sitz-, Essplatz integriert werden können, sitzen die Passagiere "der zweiten Reihe" hinter dem Esstisch - es ist die günstigste Variante. Alternativ sitzen sie noch weiter hinten.
in den Integrierten (Class A) oder Alkoven (Class C) kann das so, wie bei oben beschrieben Kastenwagen aussehen. Oft ist die Sitz-/Essgruppe bei der Alkovenmobilen noch weiter hinten im Wohnraum platziert.

Es ist zwar möglich die zweite Sitzreihe bei allen Aufbauarten direkt hinter dem Fahrer- Beifahrer zu platzieren, es wird aber nicht praktiziert, weil es zuviel Fahrzeuglänge nur zum Zweck "Fahren" beanspruchen würde.

In allen konventionellen Fahrzeugen, wo die Passagiere im Wohnraum sitzen ist deren Aussicht begrenzt. Zum einen gibt es Mobiliar (Schränke, Waschraum, etc), die an den Fahrzeugwänden platziert sind. Zum anderen ist es oft konstruktiv gewollt, dass die Wohnkabine aus Gründen der gemütlichen Wohnstimmung nicht allzu viel Fensterfläche hat. Beim Fahren ist es aber für die Passagiere ein Nachteil - sie sehen weniger von der Landschaft.

Bei hier beschriebener Neuentwicklung wird dieser Nachteil gänzlich behoben - die Passagiere der zweiten Reihe haben auch eine 360 Grad Fensterfläche zur Verfügung. Zusätzlich kann das Dach als Glassdach, Schiebedach oder auch Cabriodach gestaltet werden, um eine sphärische (Halbkugel) Sicht zu erreichen. Auf solche Ausführung wird jedoch kein erfinderischer Anspruch gestellt. Bei konventionellen Wohnmobilformen sind diese Sonderausführungen der Dachdecke zwar auch möglich, aber hier käme dies so vorteilhaft zur Geltung, wie normalerweise nur bei den Pkws möglich ist.

Das Konzept bietet auch Sicherheitsvorteile. Beim typisch Wohnmobilspezifischen Problem, dass bei Auffahrunfällen, im Wohnteil gelassene Gegenstände (im Alltag kaum vermeidbar) oder losgerissene Einrichtungsstücke (Möbel etc.) nach vorne geschleudert werden und die vorne sitzenden Insassen dadurch verletzen könnten. Beim hier beschriebenen Wohnmobil verläuft die Flugbahn dieser Gegenstände deutlich unter der Fahrkabine (niedriger als bei allen bekannten Wohnmobilaufbautypen) und somit werden die Passagiere bei einem Auffahrunfall nicht gefährdet.

Detaillierte Beschreibung einer Beispielausführungsform.

Es gibt nun eine Vielzahl von Möglichkeiten, das hier vorgestellte Wohnmobil in verschiedenen konstruktiven Details und Designs auszuführen. Hiefür darf zunächst auf die definierten Patentansprüche verwiesen werden. Im Folgenden wird ein - vor allem im Design - vereinfachtes Beispiel einer solchen Konstruktion mit Zeichnungen dargestellt.

Die Erklärung der Zeichnungen:
- Fig. 1: schematische Seitenansicht Wohnmobil
- Fig. 2: Vorderansicht Wohnmobil
- Fig. 3: Rückansicht Wohnmobil
- Fig. 4: Seitenansicht, teilweise geschnitten mit Detaildarstellung
- Fig. 5: Vorderansicht, teilweise geschnitten mit Detaildarstellung
- Fig. 6.: schematische Seitenansicht mit einer Dacherhöhung im Hinterteil

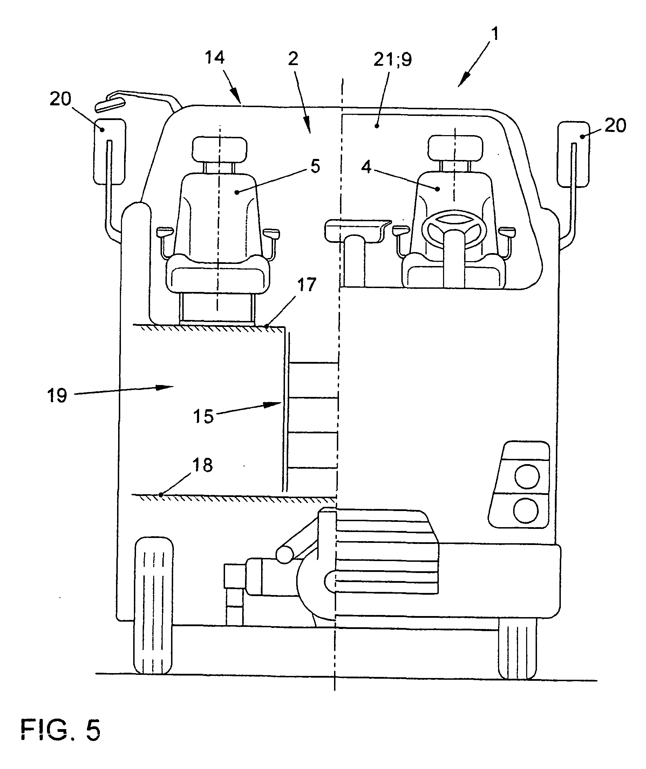

In Fig. 1 bis 5. ist ein Wohnmobil dargestellt. Das Wohnmobil weist einen Fahrbereich 2 und einen Wohnbereich 3. Beide Bereiche sind durch eine nach oben schwenkbare Treppe verbunden. Dadurch können die Reisenden, ohne das Fahrzeug verlassen zu müssen, zwischen diesen Bereichen sich bewegen können.

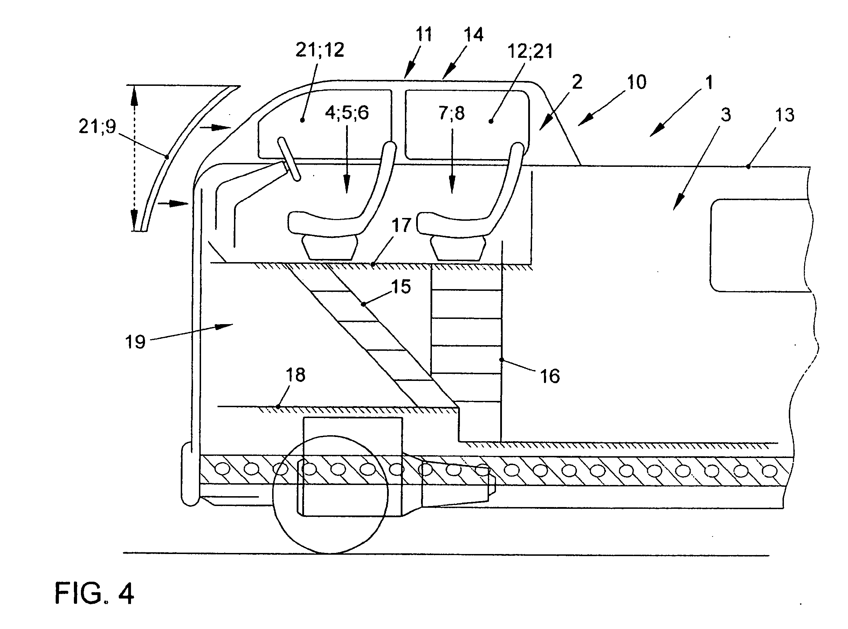

Im Fahrbereich 2 ist vorne der Fahrerplatz 4 und der Beifahrersitzplatz 5 platziert. Die 4 und 5 bilden eine erste Sitzreihe 6. In Fig. 4 ist gut erkennbar, dass direkt hinter der Sitzreihe 6 die zweite Sitzreihe 7 platziert ist.

Der Fahrbereich ist so angeordnet, dass dessen Dachlinie 11 deutlich über der Dachlinie 13 des Wohnbereichs liegt. Mit der Dachlinie 13 gemeint ist die Höhe der überwiegenden Dachfläche (oder seitliche Dachkante) hinter dem Fahrbereich unabhängig von etwaigen Teil Erhöhungen oder Aufbauten auf dem Dach im Heck des Daches (Fig. 6).

Der Fahrbereich 2 weist rundum mehrere Fenster 21 auf. Die Frontscheibe 9 ist besonders großflächig ausgebildet, sie reicht nach unten fast bis in den Fußraum der vorderen Insassen. Der Fahrbereich 2 besitzt eine Rückscheibe 10 die über der Dachlinie 13 des Wohnbereiches 3 ragt. Der Fahrbereich 2 weist mehrere Seitenscheiben 12 auf. Zum Verdeutlichung der erfinderischen Idee ist das Beispielwohnmobil vereinfacht so ausgebildet und gezeichnet, dass die Seitenfenster 12 gänzlich über der Dachlinie 13 liegen. In der Praxis, designabhängig, kann die untere Kante der Seitenscheiben unter der Seitenlinie des Daches 13 gehen. Die Grundidee ist, dass die Fenster 21 zumindest teilweise über der Dachlinie 13 liegen und die Sitzplätze so angeordnet sind, dass ein Rundpanoramablick über der Dachlinie 13 möglich ist. Die Augenhöhe aller Insassen liegt vorzugsweise über der Dachlinie 13. Die Rückscheibe des Fahrbereiches liegt über der Dachlinie 13.

Der Boden des Fahrbereichs 2 liegt sehr weit über dem Boden des Wohnbereichs 3. Die Verbindung ist die Treppe / Leiter 15, 16 in dem Mittelgang der Fahrgastzelle. Die Treppe 15 ist nach oben klappbar, um den Zugang zum Nutzraum 19 zu ermöglichen. Der Boden des Wohnbereiches 18 ist, im Beispielfahrzeug mit Frontmotor, über dem Boden des hinteren Wohnteils noch leicht erhöht. Bei Fahrzeugen mit Heckmotor kann der Boden 18 durchgehend von vorne nach hinten auf einem Niveau ausgestaltet werden.

Da der Fahrersitz sehr hoch liegt, verfügt das Wohnmobil über mehrere großflächige Außenspiegel 20 (z.B. nach aktuellen LKW-Standards).

### Die Liste von Details:

1. Wohnmobil
2. Fahrbereich
3. Wohnbereich
4. Sitzplatz Fahrer
5. Sitzplatz Beifahrer
6. vordere Sitzreihe
7. hintere Sitzreihe
8. hinterer Sitz li. oder re.
9. Frontscheibe
10. Rückscheibe
11. Dachlinie des Fahrbereichs
12. Seitenfenster
13. Dachlinie Wohnbereich
14. erhöhte Fahrkabine
15. Treppe, nach oben schwenkbar
16. Steigstufen zu hinteren Sitzplätzen
17. Boden der Fahrgastzelle
18. unterer Boden
19. Nutzraum
20. Rückspiegel
21. Fenster allgemein
22. Aufstieg zum Fahrerplatz (optionell)

## Patentansprüche

1. Ein Wohnmobil mit einem Fahrbereich (2) und einem Wohnbereih (3), wobei der Fahrbereich eine Bodenlinie und eine Dachlinie (11) aufweist und der Wohnbereich eine Bodenlinie und eine Dachlinie wobei (13) aufweist die Bodenlinie des Fahrbereiches höher angeordnet ist als die Bodenlinie des Wohnbereiches und die Dachlinie (11) des Fahrbereiches höher angeordnet ist als die Dachlinie (13) des Wohnbereiches, und die Fenster desFahrbereiches zumindest teilweise uber die Dachchlinie des Wohnbereiches aufragen,
**dadurch gekennzeichnet, dass**: die Sitzplätze im Fahrbereich (2) derart angeordnet sind, dass ein vertikalen 360 Grad Grad Panoramaausblick oder beinahe vertikalen 360 Grad Ausblick oberhalb der Dachlinie (13) des Wohnbereiches aus allen Sitzen (6,7) des Fahrbereiches (2) möglich ist und
dass die Augenhöhe der erwachsenen durchschnittlich großen Passagier über, oder beinahe über der Dachlinie (13) des Wohnbereiches liegt und
dass der Fahrbereich Fensterscheiben zu allen Seiten aufweisst und eine Rückscheibe (10) aufweisst, die oberhalb der Dachlinie (13) des Wohnbereiches liegt.

2. Wohnmobil nach Anspruch 1. **dadurch gekennzeichnet, dass** im Fahrbereich (2) sich die Sitzplätze für alle Reisenden befinden und der Wöhnbereich (3) beim Fahren nicht benutzt wird, und keine Sitzplätze mit Sicherheitsgurten aufweist.

3. Wohnmobil nach Anspruch 1. **dadurch gekennzeichnet, dass** die Definition der Dachlinie und der Bodenlinie des Wohnbereiches (3) sich erfindungsgemäß auf den Mittelteil des Wohnraums bezieht und etwaige Dach oder Boden Erhöhungen im Heck des Fahrzeugs bedingt durch z. B. Heckgaragen, nicht die Dach-, und Bodenlinien des Wohnbereiches (3) auf welche im Hauptanspruch Bezug genommen wird, sind.

## Claims

1. A recreational vehicle - comprising a driving compartment (2) and a living compartment (3) where
the driving compartment has a floor line and a roof line (11) and the living compartment has a floor line and a roof line (13) where the floor line of the driving compartment is higher than the floor line of the living compartment and the roof line (11) of the driving compartment is located higher than the roof line (13) ofthe living compartment, and the windows of the driving compartment extend at least partly over the roof line of the living compartment - which is **characterized by** such features that,
the seats in the driving compartment are arranged in such a way that a vertical 360 degree panoramic view or a nearly vertical 360 degree view is possible above the roofline (13) ofthe living compartment from all seats (6,7) of the driving compartment(2) and that,
the eye level ofthe adult average high passenger is above, or nearly above the roofline (13) of the living compartment and that,
the driving compartment has window on all sides and a rear window (10) that is located above the roof line ofthe living compartment (13).

2. A recreational vehicle as in Claim 1, is **characterized by** such features that, in the driving compartment (2) seats for all passengers are present and the living compartment (3) is not used during travel, and does not have any seats with safety-belts.

3. A recreational vehicle as in Claim 1, is **characterized by** such features that, the definition ofthe roof line and the floor line of the living compartment (3) refer to the middle section of the living space according to the invention and, probable roof or floor elevations in the rear ofthe vehicle due to, for example, rear garages, are not the roof and floor lines of the living compartment (3) which is referred to in the principal claim.

## Revendications

1. Un camping-car avec espace de conduite (2) et espace habitable (3), l'espace de conduite ayant une ligne de fond et une ligne de toit (II), et l'espace habitable ayant une ligne de fond et une ligne de toit (13), la ligne de fond de la zone de conduite étant située plus haut que la ligne de fond de l'espace habitable, et la ligne de toit (II) de l'espace de conduite étant située plus haut que la ligne de toit (13) de l'espace habitable; les fenêtres de la zone de conduite étant au moins partiellement au-dessus de l'espace habitable;
dont les caractéristiques sont
que les sièges dans l'espace de conduite sont disposés de sorte qu'une vue panoramique verticale de 360 degrés ou qu'une vue presque verticale de 360 degrés au-dessus de la ligne de toit (13) de l'espace habitable est possible depuis tous les sièges (6,7) de la zone de conduite (2) et
que les sièges dans la zone de conduite sont disposés de telle sorte que la hauteur des yeux du passager adulte de taille moyenne soit au-dessus ou presque au-dessus de la ligne de toit (13) de l'espace habitable et
que l'espace de conduite est pourvu de vitres de fenêtres sur tous les côtés ainsi que d'une lunette arrière (10) située au-dessus de la ligne de toit de l'espace habitable (13).

2. Camping-car selon la revendication 1 **caractérisé par le fait que** tous les sièges passagers se trouvent dans l'espace conducteur (2) et que l'espace habitable (3) n'est pas utilisé lors de la conduite et ne dispose pas de sièges avec ceintures de sécurité.

3. Camping-car selon la revendication 1 se **caractérise par le fait que** la définition de la ligne de toit et de la ligne de fond de l'espace habitable (3) se réfère, conformément à l'invention, à la zone médiane de l'espace habitable et que d'éventuelles élévations de sol ou de toit à l'arrière du véhicule dues par exemple à un garage arrière ne sont pas les lignes de toit et de fond de l'espace habitable (3) auxquelles il est fait référence dans la revendication principale.
